# EUROPÄISCHE PATENTSCHRIFT

(11) **EP 2 994 288 B1**
(45) Veröffentlichungstag und Bekanntmachung des Hinweises auf die Patenterteilung: **12.12.2018**
(21) Anmeldenummer: 14722641.9
(22) Anmeldetag: 05.05.2014
(51) Int. Cl.: B29C 47/68, B29C 47/08, B29C 47/92

(54) **VERFAHREN ZUM BETREIBEN EINES SIEBRADFILTERS**
METHOD FOR OPERATING A SCREENING WHEEL FILTER
PROCÉDÉ PERMETTANT DE FAIRE FONCTIONNER UN FILTRE DE CAGE D'ÉCUREUIL

(30) Priorität: 10.05.2013 DE 102013208637
(43) Veröffentlichungstag der Anmeldung: 16.03.2016
(73) Patentinhaber: Gneuss GmbH, 32549 Bad Oeynhausen (DE)
(72) Erfinder: GNEUSS, Detlef, 32545 Bad Oeynhausen (DE); GNEUSS, Stephan, 32545 Bad Oeynhausen (DE); GNEUSS, Daniel, Charlotte, NC 28277 (US)
(74) Vertreter: Tarvenkorn, Oliver
(86) Internationale Anmeldenummer: PCT/EP2014/059088
(87) Internationale Veröffentlichungsnummer: WO 2014/180776

(56) Entgegenhaltungen:
- EP-A1- 1 053 854
- EP-A1- 1 369 219
- EP-A2- 0 379 966
- DE-A1- 4 002 290
- US-A- 3 146 494
- US-A- 4 486 304
- KUHLMANN H ET AL: "WIRTSCHAFTLICHE UND HOCHWERTIGE RECYCLATPRODUKTE", PLASTVERARBEITER, HUETHIG GMBH, HEIDELBERG, DE, Bd. 42, Nr. 2, 1. Februar 1991 (1991-02-01), Seiten 18-19,22, XP000233071, ISSN: 0032-1338
- "PROBLEMLOESUNGEN FUER ALLE ANWENDUNGSBEREICHE. \FILTRIERSYSTEME", PLASTVERARBEITER, HUETHIG GMBH, HEIDELBERG, DE, Bd. 43, Nr. 8, 1. August 1992 (1992-08-01) , Seiten 116-118, XP000305391, ISSN: 0032-1338

## Beschreibung

Die Erfindung betrifft ein Verfahren zum Betreiben eines Siebradfilters.

Siebradfilter mit einer Rückspül-Reinigungsstation gehören z. B. durch die DE 103 26 487 A1 zum Stand der Technik. Bei derartigen Siebradfiltern werden im Schmelze-Kanal befindliche Siebeinsätze über einen Antrieb, der auf das Siebrad wirkt, aus dem Schmelze-Kanal herausgedreht und gegen gereinigte Siebeinsätze gewechselt. Möglichst nahe in Drehrichtung vor dem Schmelze-Kanal liegt die Rückspül-Reinigungsstation, in der während des Filterbetriebes, d.h. bei stillstehendem Siebrad, der in der Rückspül-Reinigungsstation befindlichen Siebeinsatz durch einen in dem Reinigungsmittelantrieb erzeugten Strom von Reinigungsmittel beaufschlagt wird.

Die Rückspül-Reinigungsstation wird während der Stillstands-Zeiten des Filterrades betrieben. Hier wird eine gereinigte Schmelze, die aus dem bereits gereinigten Schmelze-Strom entnommen wird zum Reinigungsmittelantrieb, hier einem Rückschusskolben in die Rückspül-Reinigungsstation geführt. Bei Betätigung des Rückschusskolbens wird die als Reinigungsmittel dienende Schmelze durch den Siebeinsatz gepresst. Der Siebeinsatz wird von dem Reinigungsmittel entgegen der üblichen Siebrichtung durchströmt, nimmt dabei die im Siebeinsatz gesammelten Verunreinigungen mit, und führt die Verunreinigungen anschließend einem Auslass zu. Nach erfolgter Reinigung des Siebeinsatzes kann dieser um einen Schritt weitergedreht und in den Schmelze-Kanal verbracht werden.

Damit der Siebeinsatz im Stillstand des Siebrades komplett gereinigt werden kann entspricht die Breite der Rückspüldüse mindestens dem Maß des jeweiligen Drehwinkels eines Drehschrittes.

Nachteilig ist dabei, dass bei der erforderlichen Größe der Rückspüldüse große Mengen von Reinigungsmitteln benötigt werden, um den Siebeinsatz in der nötigen Breite mit Reinigungsmitteln zu fluten insbesondere in den Randbereichen der Siebeinsätze kommt es oft zu einer unzureichenden Reinigung da hier der Schmelze-Druck der Rückspül-Reinigungsstation oft nicht mehr ausreicht.

Die EP 1 369 219 A1 offenbart eine Reinigungsvorrichtung für Siebscheiben, die zwar mit einer kleinen Beaufschlagungsöffnung auskommt, die jedoch durch das Vorsehen eines mit gereinigter Schmelze zu füllenden Vorflutraumes große Mengen des Reinigungsmittels, d.h. der Schmelze verschwendet.

Die EP 379 966 A2 offenbart dagegen bereits eine Siebvorrichtung zur Reinigung von Kunststoffschmelzen, bei der während der Drehung des Siebrades eine Reinigung der in der Rückspül-Reinigungsstation befindlichen Siebeinsätze erfolgt. Die Schlitzbreite der Rückspüldüse entspricht hier etwa dem Maß des Siebscheibenvorschubaktes. Bei kleinen Schlitzbreiten wird das Siebrad in relativ kleinen Schritten gedreht. Für jeden Reinigungsvorgang muss die Siebscheibe aus dem Stand, ggf. gegen Verklebungen durch die Schmelze, für die kleinen Schritte beschleunigt und wieder gestoppt werden. Dazu wird ein durchzugstarker, entsprechend hohe Energie verbrauchender Antrieb benötigt. Hinzu kommt, dass durch das ständige Beschleunigen und Abstoppen des Siebrades erheblich Zeit benötigt wird, wodurch die Siebeinsätze nur verhältnismäßig langsam gereinigt werden können. Einer Schwallverschmutzung im Schmelze-Kanal kann dieser Siebradfilter nicht ausreichend schnell entgegen wirken. Auch hier kommt es in den Randbereichen der Siebeinsätze oft zu einer unzureichenden Reinigung. Ein effektives, Schmelze und Energie sparendes Reinigen ist nicht möglich.

Der Erfindung liegt die Aufgabe zugrunde, die Rückspülung bzw. Reinigung von Siebeinsätzen dahingehend zu optimieren, dass weniger Reinigungsmittel verschwendet wird, eine bessere Reinigung der Siebeinsätze erfolgt, eine Energieeinsparung gewährleistet ist und Schwallverschmutzungen entgegen gewirkt werden kann.

Zur Lösung dieser Aufgabe wird ein Verfahren mit den Merkmalen des Anspruchs 1 vorgeschlagen.

Dadurch wird erreicht, dass der Rückspüldüse während des Rückspülvorgangs immer neuen, durch die schmale Düse kleinen Bereichen des zu reinigenden Siebeinsatzes gegenüberstehen, wobei auch eine bessere Reinigung in den Randbereichen des Siebeinsatzes möglich ist. Durch die Einstellbarkeit der Reinigungsmittelmenge bzw. des Reinigungsmitteldrucks bzw. der Reinigungsmittelfließgeschwindigkeit ist eine Reaktion auf den Verschmutzungsgrad der Siebeinsätze möglich, wodurch weniger Reinigungsmittel verschwendet wird. Das Siebrad, welches gegenüber der Schlitzdüsenbreite große Wege zurücklegt, muss nicht ständig beschleunigt und abgebremst werden, wodurch kleinere, leistungsschwächere Antriebe eingesetzt werden können, und dennoch eine schnellere, auch Schwallverschmutzungen entgegen wirkende Reinigung der Siebeinsäte ermöglicht wird.

Hinzu kommt, dass bei den bekannten Siebradfiltern die Reinigungsvorrichtung mit dem Antrieb für das Siebrad synchronisiert ist, so dass zunächst der Antrieb und dann die Reinigungsvorrichtung aktiviert wird. Dadurch muss das Siebrad immer gegen den im Schmelze-Kanal aufgebauten Druck beschleunigt werden. D. h. das Siebrad wird durch die Schmelze gegen eine Gehäuseinnenseite des Siebradfilters gepresst, wodurch es zu Verklebungen und/oder Verkantungen des Siebrades im Siebradgehäuse kommen kann, auf jeden Fall jedoch der Reibwiderstand zwischen Siebrad und Siebradgehäuse-Innenwand erheblich erhöht wird.

Erfindungsgemäß entsteht durch den beim Drehen des Siebrades gleichzeitigen bzw. eventuell vorher einsetzenden Rückspülvorgang mit erhöhtem Druck ein Gegendruck gegen das Siebrad, so dass dadurch weniger Kraft zum Antreiben des Siebrades benötigt wird. Selbst bei schlecht schmierenden Schmelzen ist der Wiederstand zwischen Siebrad und Gehäusewand des Siebradfilters erheblich vermindert, so dass es zu keinen Blockaden kommt.

Durch den erhöhten Anfangsdruck wird ein Losbrechen des durch den vorhergehenden Stillstand im Gehäuse verklebten bzw. verkanteten Siebrades erleichtert. Die Spitzenlast des Drehantriebes wird durch das Losbrechen beim jeweiligen Anfahren der Drehbewegung vermindert, und es kann ein leistungsschwächerer, kostengünstigerer und auch kostengünstiger zu betreibender Drehantrieb eingesetzt werden

Um je nach verwendeter Schmelze ein eventuell noch besseres Reinigungsergebnis erzielen zu können, wird erfindungsgemäß vorgeschlagen, die reinigende Rückspülung in der Rückspül-Reinigungsstation nicht nur während der Drehung des Siebrades, sondern zumindest auch zeitweise während des Stillstandes des Siebrades erfolgen zu lassen.

Durch Einstellung der Reinigungsmittelmenge und/oder des Reinigungsmitteldrucks und/oder der Reinigungsmittelfließgeschwindigkeit, die einzeln oder auch kombiniert während einer Drehbewegung variiert werden können, lässt sich eine optimale, Ressourcen schonende Reinigung bewerkstelligen.

Je nachdem, welche Materialien verarbeitet werden kann erfindungsgemäß problemlos auf deren spezifischen Eigenschaften und gewünschte Drehgeschwindigkeiten des Siebrades reagiert werden.

Damit kann z. B. kurz nach Beendigung der Drehbewegung oder vor Anfang einer Drehbewegung noch rückgespült bzw. schon rückgespült werden um dadurch im Übergangsbereich zwischen zwei Drehschritten eine noch optimalere Reinigung der Siebeinsätze zu erreichen.

Die Erfindung wird anhand einer Zeichnung näher erläutert.

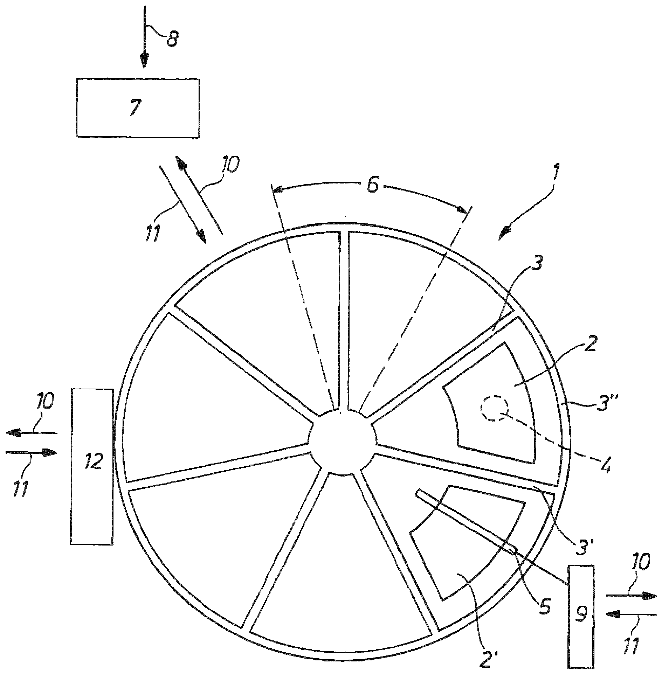

Dabei zeigt die Figur schematisch dargestellt ein Siebrad 1, in dem stellvertretend für eine große Anzahl von Siebeinsätzen die Siebeinsätze 2, 2' gezeigt sind. Die Siebeinsätze 2 sind jeweils zwischen an der Innenwand des Siebradfiltergehäuses anliegenden Stegen 3, 3', 3" angeordnet. Der Siebeinsatz 2 befindet sich dabei vor dem Schmelze-Kanal 4, während sich der Siebeinsatz 2' vor der Schlitzdüse 5 der Rückspül-Reinigungsstation befindet. Es ist deutlich zu erkennen, dass die Schlitzdüse 5 in radialer Richtung die Abmessungen des Siebeinsatzes 2' im Wesentlichen überstreicht, normal zur radialen Richtung jedoch einen wesentlich kleineren Winkel als die Erstreckung des Siebeinsatzes 2' normal zur Radialen, aber auch einen kleineren Winkel als den angedeuteten Drehwinkel 6 pro Hub überstreicht.

Der Steuer- bzw. Regelvorrichtung 7 können einerseits Parameter über eine Eingabe 8 vorgegeben werden, andererseits stehen der Steuer- bzw. Regelvorrichtung 7 am Siebrad 1 gemessene Daten wie Differenzduck, Drehgeschwindigkeit, Ladezustand des Reinigungsmittelantriebes 9 usw. über einen Datenanschluss 10 zu Verfügung. Über einen Steueranschluss 11 kann die Steuer- bzw. Regelvorrichtung 7 den Drehantrieb 12 und/oder den Reinigungsmittelantrieb 9 erfindungsgemäß beeinflussen.

### Bezugszeichenübersicht:

- 1: Siebrad
- 2: Siebeinsatz
- 3: Stege
- 4: Schmelze-Kanal
- 5: Schlitzdüse
- 6: Drehwinkel
- 7: Steuer- bzw. Regelvorrichtung
- 8: Eingabe
- 9: Reinigungsmittelantrieb
- 10: Datenanschluss
- 11: Steueranschluss
- 12: Drehantrieb

## Patentansprüche

1. Verfahren zum Betreiben eines Siebradfilters für hochviskose Schmelzen mit Drücken größer als 10 bar und Temperaturen größer als 90°C, mit einem Siebeinsätze (2) halternden Siebrad (1), und einem dem Siebrad (1) zugeordneten, dieses schrittweise drehantreibenden Drehantrieb (12), sowie mit einer Rückspül-Reinigungsstation, in der die Siebeinsätze sukzessiv von einem durch einen Reinigungsmittelantrieb (9) erzeugten Strom von Reinigungsmittel beaufschlagt werden, wobei dem Reinigungsmittelantrieb (9) eine in Reinigungsmittel-Flussrichtung nachgeordnete, als Schlitzdüse ausgebildete Rückspüldüse zugeordnet ist, deren wirksame Öffnung einen in der Rückspül-Reinigungsstation befindlichen Siebeinsatz (2) in seiner radialen Erstreckung abdeckt, und mit einer Steuer- bzw. Regelvorrichtung (7) die auf den Reinigungsmittelantrieb (9) einwirkt, wobei die reinigende Rückspülung während der Drehung des Siebrades (1) erfolgt, und die Steuer- bzw. Regelvorrichtung (7) die Reinigungsmittelmenge und/oder den Reinigungsmitteldruck und/oder die Reinigungsmittelfließgeschwindigkeit in Abhängigkeit vom zeitlichen Verlauf der Drehung des Siebrades (1) und/oder in Abhängigkeit von der Dreh-Geschwindigkeit des Siebrades (1) und/oder in Abhängigkeit von einem am, im Schmelze Kanal (4) befindlichen Siebeinsatz (2) herrschenden Differenzdruck einstellt, wobei die Abmessung der wirksamen Öffnung der Schlitzdüse (5) normal zur Radialen und der zurückgelegte Weg des Siebrades (1) während eines Antriebsschrittes so aufeinander abgestimmt sind, dass die wirksamen Öffnung der Schlitzdüse (5) kleiner als der zurückgelegte Weg des Siebrades (1) während eines Antriebsschrittes ist, und wobei parallel zu einem Anfahrprozess für die Drehung des Siebrades (1) zumindest der Reinigungsmitteldruck gegenüber dem Druckverlauf während der Drehung des Siebrades (1) erhöht eingestellt wird.

2. Verfahren zum Betreiben eines Siebradfilters nach Anspruch 1,
**dadurch gekennzeichnet,**
**dass** die reinigende Rückspülung in der Rückspül-Reinigungsstation während der Drehung des Siebrades (1) und zumindest zeitweise während des Stillstandes des Siebrades (1) erfolgt.

## Claims

1. Method for operating a screen wheel filter for highly viscous melts at pressures of greater than 10 bar and temperatures of greater than 90°C, said filter having a screen wheel (1), which holds screen inserts (2), and a rotary drive (12), which is assigned to the screen wheel (1) and drives the latter in rotation in a stepwise manner, and having a backflushing cleaning station, in which a stream of cleaning agent generated by a cleaning agent drive (9) is applied successively to the screen inserts, wherein assigned to the cleaning-agent drive (9) is a backflushing nozzle, which is arranged downstream in the cleaning agent flow direction and is designed as a slot-type nozzle and whose effective opening covers, in its radial extent, a screen insert (2) situated in the backflushing cleaning station, and having a control or regulation device (7) which acts on the cleaning agent drive (9), wherein the cleaning backflushing is realized while the screen wheel (1) is rotating, and the control or regulation device (7) sets the cleaning agent quantity and/or the cleaning agent pressure and/or the cleaning agent flow speed in a manner dependent on the temporal profile of the rotation of the screen wheel (1) and/or in a manner dependent on the rotational speed of the screen wheel (1) and/or in a manner dependent on a differential pressure prevailing at the screen insert (2) situated in the melt channel (4), wherein the dimension of the effective opening of the slot-type nozzle (5) normal to the radial and the distance covered by the screen wheel (1) during a drive step are matched to one another such that the effective opening of the slot-type nozzle (5) is smaller than the distance covered by the screen wheel (1) during a drive step, and wherein, parallel to a starting process for the rotation of the screen wheel (1), at least the cleaning agent pressure is set so as to be elevated in relation to the pressure profile while the screen wheel (1) is rotating.

2. Method for operating a screen wheel filter according to Claim 1,
**characterized**
**in that** the cleaning backflushing in the backflushing cleaning station is realized while the screen wheel (1) is rotating and at least at times while the screen wheel (1) is at a standstill.

## Revendications

1. Procédé de conduite d'un filtre à cage d'écureuil pour matière fondue très visqueuse sous une pression supérieure à 10 bars et à des températures supérieures à 90°C, le filtre présentant une roue (1) de filtre portant des garnitures de filtre (2) et un entraînement à rotation (12) associé à la roue (1) de filtre et entraînant celle-ci en rotation pas à pas, ainsi qu'un poste de nettoyage par contre-lavage dans lequel un écoulement d'agent de nettoyage formé par un entraînement (9) d'agent de nettoyage est appliqué sur les garnitures de filtre successives,
une tuyère de contre-lavage configurée comme tuyère en fente disposée en aval dans la direction d'écoulement de l'agent de nettoyage étant associée à l'entraînement (9) d'agent de nettoyage et son ouverture active couvrant dans son extension radiale une garniture de filtre (2) située dans le poste de nettoyage par contre-lavage, et
un ensemble (7) de commande et/ou de régulation qui agit sur l'entraînement (9) d'agent de nettoyage, le contre-lavage de nettoyage ayant lieu pendant la rotation de la roue (1) de filtre et l'ensemble (7) de commande et/ou de régulation établissant le débit d'agent de nettoyage, la pression d'agent de nettoyage et/ou la vitesse d'écoulement de l'agent de nettoyage en fonction de l'évolution temporelle de la rotation de la roue (1) de filtre, en fonction de la vitesse de rotation de la roue (1) de filtre et/ou en fonction d'une différence de pression qui règne sur la garniture de filtre (2) placée dans le canal (4) de matière fondue, le dimensionnement de l'ouverture active de la tuyère en fente (5) perpendiculairement au rayon et le chemin parcouru par la roue (1) de filtre pendant un pas d'entraînement étant accordés les uns aux autres de telle sorte que l'ouverture active de la tuyère en fente (5) soit plus petite que le chemin parcouru par la roue (1) de filtre pendant un pas d'entraînement, au moins la pression d'agent de nettoyage étant augmentée par rapport à l'évolution de la pression pendant la rotation de la roue (1) de filtre en parallèle à une opération de démarrage de la rotation de la roue (1) de filtre.

2. Procédé de conduite d'un filtre à cage d'écureuil selon la revendication 1, **caractérisé en ce que** le contre-lavage de nettoyage s'effectue dans le poste de nettoyage par contre-lavage pendant la rotation de la roue (1) de filtre et au moins une partie du temps d'arrêt de la roue (1) de filtre.
